# EUROPEAN PATENT APPLICATION

(11) **EP 4 321 572 A1**
(43) Date of publication of application: **14.02.2024**
(21) Application number: 22784495.8
(22) Date of filing: 22.03.2022
(51) Int. Cl.: C08K 5/09, C08K 5/10, C08K 5/3415, C08K 5/5415, C08L 83/05, C08L 83/07

(54) **CURABLE ORGANOPOLYSILOXANE COMPOSITION, THERMALLY CONDUCTIVE MEMBER, AND HEAT DISSIPATION STRUCTURE**

(30) Priority: 09.04.2021 JP 2021066179
(71) Applicant: Dow Toray Co., Ltd., Tokyo 140-8617 (JP)
(72) Inventor: OTA Kenji, Ichihara-shi Chiba 299-0108 (JP)
(74) Representative: Murgitroyd & Company
(86) International application number: PCT/JP2022/013226
(87) International publication number: WO 2022/215510

(57) **Abstract**

PROBLEM

To provide a curable organopolysiloxane composition that has high thermal conductivity while suppressing a change in hardness of the cured material after heat aging, and that provides an organopolysiloxane cured material that can maintain flexibility and stress relaxation even when a thermally conductive member made of the cured materials is used at high temperature. The present invention also relates to a thermally conductive member made of the composition and a heat dissipating structure using the thermally conductive member.

RESOLUTION MEANS

Use of a curable organopolysiloxane composition containing (A) an alkenyl group-containing organopolysiloxane of a specific viscosity, (B) an organohydrogen polysiloxane, (C) a thermally conductive filler in an amount in the range of 60 to 90% by volume of the total solid content in the composition, (D) at least one type selected from fatty acids, fatty acid esters, and fatty acid metal salts in an amount in the range of 0.05 to 2.00 parts by mass per 100 parts by mass of Component (C), (E) a hydrosilylation reaction catalyst in a catalyst amount, and (F) a heat resistance imparting agent.

## Description

### [TECHNICAL FIELD]

The present invention relates to a curable organopolysiloxane composition that has high thermal conductivity while suppressing a change in hardness of the cured material after heat aging, and that provides an organopolysiloxane cured material that can maintain flexibility and stress relaxation even when a thermally conductive member made of the cured materials is used at high temperature. The present invention also relates to a thermally conductive member made of the composition and a heat dissipating structure using the thermally conductive member.

### [BACKGROUND ART]

In recent years, in order to efficiently dissipate the heat generated by electronic and electric equipment, such as electronic components and batteries, along with the high-density and high-integration on printed circuit boards and hybrid ICs on which electronic components, such as transistors, ICs, and memory elements, are mounted, and the increase in the capacity of secondary batteries (cell type), thermally conductive silicone compositions including organopolysiloxane, aluminum oxide powder, zinc oxide powder, and other thermally conductive fillers have been widely used and thermally conductive silicone composition filled with large amounts of thermally conductive filler have been proposed. Thermally conductive silicone compositions are expected to have excellent heat resistance, and even when blended with high concentrations and high volume percentages of thermally conductive fillers, the cured product is rubber-like, and thus has a certain degree of flexibility and stress relaxation properties, maintains tracking and adhesion to the heat source in the heat dissipating structure, and maintains heat dissipation performance. In recent years, however, there has been a tendency to demand a high content of thermally conductive filler. In general, the rubber properties derived from polymer silicone cured materials tend to be impaired when a large amount of thermally conductive filler is added. If the amount of thermally conductive filler is too high, the resulting cured material may become too hard, resulting in gaps between the cured material and the heat-dissipating object, which may impair tracking and stress relaxation properties, and in turn, may prevent sufficient heat dissipation. In other words, in curable thermally conductive silicone compositions, controlling the hardness of the thermally conductive cured material is an extremely important issue in achieving heat dissipation.

On the other hand, Patent Document 1 proposes adding a limited amount of a stearic acid compound to a silicone-based composition for insulating and heat-dissipating sheets containing boron nitride powder in order to act as a moisture absorption inhibitor and to improve mold release properties. However, Patent Document 1 does not disclose whatsoever a composition with high heat dissipation, such as those containing a high volume% of thermally conductive filler, such as more than 500 parts by mass to 100 parts by mass of organopolysiloxane. Furthermore, Patent Document 1 does not describe nor suggest any effect on hardness when a stearic acid compound is used in a cured material with a high amount of thermally conductive filler, and does not mention a problem or solution for controlling the hardness of thermoelectrically conductive cured materials.

Furthermore, Patent Document 2 proposes a conductive silicone adhesive that uses a catalytic amount of a condensation catalyst, including a metal salt of a carboxylic acid such as iron stearate or the like. However, Patent Document 2 does not mention nor suggest a hydrosilylation reaction-curable composition, and contains no disclosure whatsoever of a composition with high heat-dissipating properties, such as those containing high volume% of a thermally conductive filler. Furthermore, Patent Document 2 does not describe or suggest any effect of iron stearate or the like as a condensation catalyst on the hardness of a cured material containing a large amount of thermally conductive filler when the iron stearate or the like is used in a hydrosilylation reaction curable composition, and does not mention a problem nor resolution related to controlling the hardness of a thermoelectrically conductive cured material.

Similarly, an electrically conductive cured silicone product is proposed in Patent Document 3. However, Patent Document 3 does not mention nor suggest a hydrosilylation reaction-curable composition, and contains no disclosure whatsoever of a composition with high heat-dissipating properties, such as those containing high volume% of a thermally conductive filler. Furthermore, Patent Document 3 mentioned that the surface of metal particles in the form of flakes may be treated with fatty acids or fatty acid esters, but there is no mention or suggestion of the amount of treatment nor the effect when applied to a hydrosilylation reaction-curable composition. The description of fatty acids is limited to the scope of a general powder surface treatment, and there is no description or suggestion of a technical effect, especially an effect on the hardness of hydrosilylation reaction curable composition when used for a cured product with a large amount of thermally conductive filler.

Note that none of the above documents mention nor suggest the use of fatty acids, or the like in combination with a heat-resistance imparting agent such as phthalocyanine compounds in hydrosilylation reaction-curable silicone compositions.

### [Prior Art Documents]

### [Patent Documents]

Patent Document 1: Japanese Unexamined Patent Application Publication H07-330927
Patent Document: 2 Japanese Unexamined Patent Application Publication 2002-80816
Patent Document: 3 Japanese Unexamined Patent Application Publication 2002-088227

### [SUMMARY OF THE INVENTION]

### [PROBLEM TO BE SOLVED BY THE INVENTION]

On the other hand, the present inventors have found a new problem for hydrosilylation reaction curable thermally conductive silicone compositions. As described above, when thermally conductive silicone compositions containing large amounts of thermally conductive fillers are cured, the cured material tends to become hard, and there is often a trade-off between high thermal conductivity and flexibility of the cured material. However, even when thermally conductive silicone compositions are designed by adjusting the hardness and thermal conductivity of the cured material, in the case of high heat-dissipating compositions that contain a very high volume% of thermally conductive fillers (for example, 60% by volume or more of the total composition (solid content)) as described above, the cured material may harden rapidly after heating and aging, and will lose flexibility and rubber elasticity. The cured material may harden rapidly after heat aging and lose its flexibility and rubber elasticity, resulting in loss of stress relaxation, as well as tracking and adhesion in the heat-dissipating structure. As a result, the originally planned heat dissipation characteristics may not be fully realized.

In light of the foregoing, an objective of the present invention is to provide a curable organopolysiloxane composition that contains extremely high volume% of a thermally conductive filler, and therefore has high thermal conductivity while suppressing a change in hardness of the cured material after heat aging, and that provides an organopolysiloxane cured material that can maintain flexibility and stress relaxation even when a thermally conductive member made of the cured materials is used at high temperature. The present invention also relates to a thermally conductive member made of the composition and a heat dissipating structure using the thermally conductive member.

### [MEANS FOR SOLVING THE PROBLEM]

After careful research, the present inventors have found that the above problems can be solved by a curable organopolysiloxane composition containing a large amount of thermally conductive filler to provide high thermal conductivity (specifically in the range of 60 to 90% by volume of the total solid content of the composition), a certain amount of a heat resistance imparting agent and at least one or more types selected from fatty acids, fatty acid esters, and fatty acid metal salts, which are hydrosilylation reaction curable compounds. Here, the fatty acid compound is particularly preferably a saturated fatty acid compound, such as stearic acid, alkali metal salts of stearic acid (such as lithium salts and the like), and alkaline earth metal salts of stearic acid (such as calcium salts and the like). Furthermore, when preparing the composition, the timing for adding the fatty acid compound is optional, and the fatty acid compound may be mixed with the alkenyl group-containing organopolysiloxane which is the main component of the composition and the thermally conductive filler and then heated (base heat), or the alkenyl group-containing organopolysiloxane and the thermally conductive filler can be mixed together, and the fatty acid compound may be added with the other components to the mixture after base heating. In other words, the technical effect of the invention can be achieved even if the fatty acid compound is added to the composition of the present invention at timing other than as a surface treatment agent for thermally conductive filler. (See examples)

Specifically, the objective of the present invention can resolve the aforementioned problems by a curable organopolysiloxane composition, a cured product thereof, a thermally conductive member containing the same, a heat dissipating structure using the same, and a method for manufacturing the same, the curable organopolysiloxane composition containing:
(A) 100 parts by mass of an alkenyl group-containing organopolysiloxane having a viscosity of 10 to 100,000 mPa·s at 25°C;
(B) an organohydrogenpolysiloxane in an amount in which silicon atom-bonded hydrogen atoms in Component (B) are 0.1 to 10 mols with respect to 1 mol of alkenyl groups in Component (A);
(C) a thermally conductive filler in an amount that ranges from 60 to 90% by volume based on the total solid content in the composition;
(D) at least one or more fatty acid, fatty acid ester or fatty acid metal salt in an amount ranging from 0.05 to 2.00 parts by mass per 100 parts by mass of Component (C);
(E) a catalytic amount of a catalyst for a hydrosilylation reaction; and
(F) a heat resistance imparting agent,
and further optionally containing:
(G) one or more Components selected from the following Components (G1) and (G2)
(G1) an organopolysiloxane having a viscosity of 10 to less than 10,000 mPa·s at 25°C, expressed by general formula (1):
   [Chem. Fig. 1] 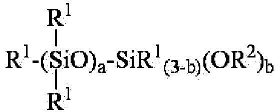
(In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3); (G2) a siloxane compound having an alkenyl group and a hydrolyzable silyl group on a molecular end and a viscosity of 10 to less than 10,000 mPa-s at 25°C, expressed by general formula (2):

R^{alk}R³₂SiO(R³₂SiO)_{c}R³₂Si-R⁴-SiR³_{(3-d)}(OR⁵)_{d}

(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
(H) one or more type of alkoxysilane having an alkyl group with 6 or more carbon atoms in a molecule, or a hydrolysis condensate thereof; and
(I) a hydrosilylation reaction inhibitor, adhesion promoter, organic solvent and other additives.

### [EFFECT OF THE INVENTION]

The present invention provides a curable organopolysiloxane composition that has high thermal conductivity while suppressing a change in hardness of the cured material after heat aging, and that provides an organopolysiloxane cured material that can maintain flexibility and stress relaxation even when a thermally conductive member made of the cured materials is used at high temperature. Furthermore, the present invention can provide a thermally conductive member obtained by curing the curable organopolysiloxane composition, and a heat dissipating structure using the member (in particular, a heat dissipating structure of an electrical or electronic device, including a heat dissipating structure of an electrical or electronic component and a heat dissipating structure of a secondary battery).

In particular, the cured product of the curable organopolysiloxane composition has excellent stress relaxation and flexibility because hardness change is suppressed even when used at high temperature. When used for a heat dissipating object of various shapes, voids, and peeling from the heat generating member will not easily occur due to vibration or the like (including voids due to partial or temporary peeling from the member, same hereinafter), but rather excellent adhesion and tracking will be maintained, so there is an advantage that the initial heat dissipation efficiency of the initial application will not be lost, but rather will continue. Compared to conventional products, the present invention has the advantage of superior durability and heat dissipation performance of heat-dissipating members, applicability to heat-dissipating objects with various shapes, resistance to peeling even when used for assembly and fabrication under high temperature, and when used in heat dissipating processes at high temperature for a long period of time.

### [MODE FOR CARRYING OUT THE INVENTION]

### [Curable organopolysiloxane composition]

The composition according to the present invention may contain (A) an alkenyl group-containing organopolysiloxane having a viscosity of 10 to 100,000 mPa·s at 25°C;
(B) an organohydrogenpolysiloxane;
(C) a thermally conductive filler;
(D) at least one or more fatty acid, fatty acid ester or fatty acid metal salt (hereinafter also referred to as fatty acid compound);
(E) a catalyst for a hydrosilylation reaction; and
(F) a heat resistance imparting agent,
and may further optionally contain:
(G) (G1) a specific organopolysiloxane having an alkoxy group only at a terminal of the molecule;
(G2) a specific siloxane compound having an alkenyl group and a hydrolyzable silyl group on a molecular terminal;
(H) an alkoxysilane or a hydrolysis condensate thereof, having an alkyl group with 6 or more carbon atoms in a molecule; and
(I) a hydrosilylation reaction inhibitor, adhesion promoter, organic solvent, or another additive. The compositions may be in the form of one-component compositions or a multi-component composition such as a two-component composition. Hereinafter, each component, added amount thereof, and the like will be described.

### [(A) Alkenyl group-containing organopolysiloxane]

The alkenyl group-containing organopolysiloxane, which is Component (A), is the main agent of the present composition, having a viscosity within a range of 10 to 100,000 mPa·s at 25°C. The viscosity of Component (A) at 25°C is preferably within a range of 10 to 100,00 mPa s, and more preferably within a range of 10 to 10,000 mPa s. If the viscosity of Component (A) is less than 10 mPa s, the mechanical strength of the resulting organopolysiloxane cured product tends to decrease. On the other hand, if the viscosity of Component (A) exceeds 100,000 mPa s, the resulting composition is too high in viscosity, and the handling workability and coatability on fine parts tend to decrease.

Component (A) is formed by one or more alkenyl group-containing organopolysiloxanes. The molecular structure of such an alkenyl group-containing organopolysiloxane is not particularly limited, with examples thereof including straight-chain, branched, cyclic, three-dimensional network structures, and combinations thereof. Examples of alkenyl groups in a molecule of Component (A) include vinyl groups, allyl groups, butenyl groups, hexenyl groups, and the like. Furthermore, examples of organic groups other than alkenyl groups in Component (A) include: methyl groups and other alkyl groups; phenyl groups and other aryl groups; and monovalent hydrocarbon groups other than alkenyl groups such as 3,3,3-trifluoropropyl groups and other halogenated alkyl groups, but methyl groups or phenyl groups are preferred from an industrial perspective.

Component (A) is particularly preferably a straight-chain alkenyl group-containing organopolysiloxane, with examples including: dimethylpolysiloxane blocked with dimethylvinylsiloxy groups at both ends of a molecular chain; a dimethylsiloxane/methylphenylsiloxane copolymer blocked with dimethylvinylsiloxy groups at both ends of a molecular chain; a dimethylsiloxane/methylvinylsiloxane copolymer blocked with trimethylsiloxy groups at both ends of a molecular chain; a dimethylsiloxane/methylvinylsiloxane/methylphenylsiloxane copolymer blocked with trimethylsiloxy groups at both ends of a molecular chain; a dimethylsiloxane/methylvinylsiloxane copolymer blocked with silanol groups at both ends of a molecular chain; polymers in which a portion of the methyl groups of these polymers are substituted with alkyl groups other than methyl groups such as ethyl groups, propyl groups, and the like, and halogenated alkyl groups such as 3,3,3-trifluoropropyl groups and the like; polymers in which vinyl groups of these polymers are substituted with alkenyl groups other than vinyl groups such as allyl groups, butenyl groups, hexenyl groups, and the like; and mixtures of two or more of these polymers. Note that regarding these alkenyl group-containing organopolysiloxanes, in terms of preventing contact failure and the like, low molecular weight siloxane oligomers (octamethyltetrasiloxane (D4) and decamethylpentasiloxane (D5)) are preferably reduced or eliminated.

### [(B) Organohydrogenpolysiloxane]

Component (B) is a main crosslinking agent of the composition of the present invention and while an organohydrogenpolysiloxane having two or more silicon atom-bonded hydrogen atoms in a molecule can be used without limitation, from the perspective of the flexibility and adhesion retention of the resulting cured product to a base material, the number (average value) of silicon atom-bonded hydrogen atoms in the organohydrogenpolysiloxane molecule preferably does not exceed 8. In particular, it is preferable to at least include (B1) a straight-chain organohydrogenpolysiloxane having a viscosity at 25 °C of 1 to 1,000 mPa-s and containing on average 2 to 4 silicon atom-bonded hydrogen atoms in the molecule, of which at least an average of 1 is in a molecular side chain.

Examples of Component (B1) include: a methylhydrogen siloxane-dimethylsiloxane copolymer capped at both molecular terminals with trimethylsiloxy groups and a methylhydrogen siloxane-dimethylsiloxane copolymer capped at both molecular terminals with dimethylhydrogensiloxy groups. Note, these examples are non-limiting, and some of the methyl groups may be substituted with phenyl groups, hydroxyl groups, alkoxy groups, and the like.

While the viscosity of Component (B1) at 25°C is not particularly limited, the viscosity is preferably within a range of 1 to 500 mPa s, and particularly preferably within a range of 1 to 100 mPa s. Moreover, from the perspective of preventing contact failure and the like, the amount of low molecular weight siloxane oligomer (octamethyltetrasiloxane (D4) and decamethylpentasiloxane (D5)) is preferably reduced or eliminated.

### [Amount of the organohydrogenpolysiloxane (crosslinking agent) in the composition]

The composition of the present invention requires that the amount of silicon atom-bonded hydrogen atoms in Component (B) be within a range of 0.1 to 10 moles with respect to 1 mole of alkenyl groups in at least Component (A). The amount is particularly preferably within a range of 0.2 to 5.0 moles, 0.3 to 3.0 moles, or 0.4 to 2.0 moles, from the perspective of the mechanical strength and adhesive properties of the resulting organopolysiloxane cured product.

### [(C) Thermally conductive filler]

Component (C) is a thermally conductive filler for imparting thermal conductivity to the present composition and a thermally conductive member obtained by curing the present composition. Such Component (C) is preferably a powder and/or a fiber of at least one or more selected from the group consisting of a pure metal, an alloy, a metal oxide, a metal hydroxide, a metal nitride, a metal carbide, a metal silicide, a carbon, a soft magnetic alloy, and a ferrite. A metallic powder, a metal oxide powder, a metal nitride powder, or carbon powder is preferable. The shape of Component (C) is not particularly limited, and includes, for example, a spherical shape, a needle shape, a disk shape, a rod shape, and an indefinite shape, and is preferably a spherical shape or an indefinite shape. The average particle diameter of Component (C) is not particularly limited, but is preferably in the range of 0.01 to 500 µm, and more preferably in the range of 0.01 to 300 µm.

Component (C) is suitably silver powder, aluminum powder, aluminum oxide powder, zinc oxide powder, magnesium oxide powder, aluminum nitride powder or graphite. When electrical insulation is required for the present composition, a metal oxide powder or a metal nitride powder is preferable, and in particular, aluminum oxide powder, zinc oxide powder, magnesium oxide powder, or aluminum nitride powder is preferable.

The thermally conductive filler may and preferably is surface treated in whole or in part with a siloxane compound having an alkoxy group at least at one end, as Component (G) described below, and/or an alkoxysilane having a long-chain alkyl group, as Component (H). Furthermore, the powders and/or fibers that are used with these components may be treated with various surface treatment agents known as coupling agents. Surface treatment agents for treating the powders and/or fibers of Component (C) include surfactants, other silane coupling agents, aluminum-based coupling agents and silicone-based surface treatment agents, in addition to Component (G) and Component (H).

Component (C) improves the filling efficiency, so low viscosity and high thermal conductivity can be achieved by enhancing the filling efficiency by combining large particle size powders and small particle size powders in a ratio that conforms to the maximum packing theoretical distribution curve. In the present invention, Component (C) is selected from (C1) spherical and crushed aluminum oxide powder with an average particle size of 0.01 to 100 µm, (C2) spherical and crushed magnesium oxide powder with an average particle size of 0.01 to 100 µm, and (C3) irregular-shaped aluminum nitride powder with an average particle size of 0.01 to 50 µm. A mixture of two or more types with different particle sizes and shapes may and is preferably used to improve filling efficiency.

### [Amount of Component (C)]

In the present invention, in order to achieve high thermal conductivity, the amount of Component (C) should be in a range of 60 to 90% by volume, preferably in a range of 65 to 90% by volume, 70 to 90% by volume, or 70 to 85% by volume of the total solid content in the composition (component forming cured product by curing reaction). If the amount of Component (C) is less than the lower limit mentioned above, the thermal conductivity of the resulting composition may be less than 2.0 W/mK, and the desired high thermal conductivity may not be achieved. On the other hand, if the amount of Component (C) exceeds the upper limit of the above range, the viscosity of the resulting composition will be remarkably higher, or the initial hardness will be quite hard, and the handling workability, stress relaxing properties, and adhesion with respect to the substrate and the like may be reduced, even if Component (C) is used or if Component (G) and Component (H) are blended or used for surface-treating Component (C).

Note that the amount of Component (C) used is preferably in the range of 600 to 4500 parts by mass, particularly preferably in the range of 800 to 4000 parts by mass, with regard to 100 parts by mass of Component (A). When the amount of Component (C) used is within the above range of volume% and the amount used relative to Component (A) satisfies the above range, the objectives of the present invention can be achieved particularly well.

### [Other Inorganic Fillers]

The composition of the present invention contains, as optional ingredients, inorganic fillers such as fumed silica, wet-produced silica, crushed quartz, titanium oxide, magnesium carbonate, zinc oxide, iron oxide, diatomaceous earth, carbon black, and the like, and inorganic fillers where the surface of the inorganic filler has been hydrophobically treated with Component (G) or Component (H), described below, and/or another organic silicon compound (silazane and the like) can be added. From the perspective of the technical effect of the present invention, especially high thermal conductivity, flexibility, and stress relaxation properties of the cured material, as well as adhesion to the substrate, the composition may be substantially free of fillers other than Component (C). On the other hand, the above fillers may be used in combination for other functions such as improvement of mechanical strength (reinforcement) and adjustment of viscosity to the extent that the technical effect of the present invention is not impaired, and these fillers are included in one of the preferred embodiments of the present invention.

### [Surface Treatment of Component (C)]

Component (C) in the present invention is preferably surface treated with Component (G) and/or Component (H) as described below. The surface treatment method using these components is not particularly limited, but a direct treatment method on the thermally conductive inorganic filler of Component (C), an integral blend method, a dry concentrate method, or the like can be used. In the present invention, from the perspective of improving the filling properties of the composition as a whole and the adhesive strength of the cured product, a most preferable example is a heat surface treatment method, in which some or all of the aforementioned Component (A) as well as Component (G) and Component (H) are pre-mixed, and Component (C) is sequentially mixed into the mixture and then heated (base heat) after homogenization. In the surface treatment method, the mixture can be heated and stirred at 100 to 200°C under reduced pressure, and the temperature conditions and stirring time can be designed based on the amount of a sample, but are preferably within a range of 120 to 180°C and 0.25 to 10 hours. Note that although the surface treatment process of Component (C) is optional, from the viewpoint of improving flowability, gap fill properties, and thixotropic properties of the composition, a stepwise process is acceptable, where at least a portion of Component (C) is surface treated by Component (G), followed by surface treatment of Component (C) by Component (H).

The device used for mixing described above is not particularly limited, and examples include single or double-shaft continuous mixers, double rolls, Ross mixers, Hobart mixers, dental mixers, planetary mixers, kneader mixers, Henschel mixers, and the like.

### [(D) Fatty acid compound]

Component (D) is a component that inhibits hardness change during heat aging of the composition and of the cured component, which is a silicone-based thermally conductive member made by curing the composition. In particular, when the amount of the thermally conductive filler which is Component (C) is within the above range, even if Component (D) is not used, there are cases where the cured material may harden rapidly during heat aging, resulting in loss of stress relaxation properties, flexibility substrate adhesion, and the like. However, when Component (D) and especially Component (F) are used together as described below in the hydrosilylation-curing reactive composition, the resulting cured material will have high thermal conductivity, maintain the initial hardness, and achieve favorable stress relaxation, flexibility, and substrate adhesion.

Component (D) is at least one or more of fatty acid, fatty acid ester, or fatty acid metal salt, and specific examples include: fatty acids such as caproic acid, caprylic acid, peralgonic acid, capric acid, undecanoic acid, lauric acid, myristic acid, palmitic acid, stearic acid, behenic acid, oleic acid, and the like; fatty acid esters that are alkyl esters of these fatty acids; alkali metal salts of fatty acids such as salts of sodium, lithium, potassium, and the like; alkaline earth metal salts of fatty acids such as salts of calcium, and the like. Suitably, Component (D) is at least one or more of (D1) saturated fatty acids and saturated fatty acid metal salts, and is particularly preferably one or more of (D1-1) stearic acid, alkali metal salts of stearic acid, and alkaline earth metal salts of stearic acid.

Although the mechanism by which Component (D) inhibits the hardness change of the cured product, especially in combination with Component (F), has not been clearly identified, it has been hypothesized that the presence of a limited amount of fatty acid compounds such as fatty acids, fatty acid salts (soaps), fatty acid esters, and the like in the silicone cured product matrix with improved heat resistance in the presence of Component (F) may result in the formation of a water-resistant and lubricious thin film or local structure of these fatty acid compounds on or near the particle surface of the thermally conductive filler, thus chemically deactivating or inactivating the particle surface at high temperature, and effectively preventing aggregation between surfaces and formation of coarse particles of the thermally conductive filler. However, as described below, Component (D) can demonstrate this technical effect simply by being homogeneously mixed with other components, without being used as a surface treatment agent for the thermally conductive filler; therefore, the timing of adding Component (D) in the composition is not limited in the present invention.

The amount of Component (D) must be in a range of 0.05 to 2.0 parts by mass for 100 parts by mass of Component (C) (total amount if more than one component), which is the thermally conductive filler. In order to achieve the technical effect of the present invention, the amount of Component (D) must be within the above mentioned range, and the above mentioned range has critical significance. In other words, if the amount of Component (D) is less than the lower limit mentioned above, hardness change of the cured material may not be suppressed, even if Component (D) is used together with Component (F) (for example, Comparative Examples 1 and 3, as described below). On the other hand, if the amount of Component (D) exceeds the aforementioned upper limit, the hardness change of the cured material might not be suppressed (for example, Comparative Example 4 described below).

### [(E) Catalyst for hydrosilylation reaction]

The hydrosilylation-reaction catalyst is a component required in curing the present composition. Examples include a platinum-based catalyst, a rhodium-based catalyst, and a palladium-based catalyst, and a platinum-based catalyst is preferred because a platinum-based catalyst can significantly promote curing of the present composition. Exemplary platinum-based catalysts include platinum fine powder, chloroplatinic acid, an alcohol solution of chloroplatinic acid, a platinum-alkenyl siloxane complex, a platinum-olefin complex, a platinum-carbonyl complex, and a catalyst in which these platinum-based catalysts are dispersed or encapsulated with a thermoplastic resin such as silicone resin, polycarbonate resin, acrylic resin, or the like, with a platinum-alkenyl siloxane complex particularly preferable. In particular, a 1,3-divinyl-1,1,3,3-tetramethyldisiloxane complex of platinum is preferred, and is preferably added in the form of an alkenylsiloxane solution of the complex. In addition, in terms of improving the handleability as well as the pot life of the composition, a platinum containing hydrosilylation reaction catalyst in microparticles dispersed and encapsulated with thermoplastic resin may be used. Note that as the catalyst for promoting the hydrosilylation reaction, a non-platinum-based metal catalyst such as iron, ruthenium, iron/cobalt, or the like may be used.

On the other hand, a so-called high energy beam-activated or photoactivated catalyst such as a (methylcyclopentadienyl)trimethyl platinum(IV) complex, bis(2,4-pentanedionato) platinum(II) complex, or the like may be used as the hydrosilylation-reaction catalyst. By using such a hydrosilylation-reaction catalyst, the composition as a whole can be cured even at low temperatures triggered by irradiation with a high energy beam, storage stability is excellent, and reaction control is facilitated. Thus, the properties of excellent handling workability may be achieved. In this case, ultraviolet light is preferred as the high energy beam from the perspective of catalytic activation efficiency, and ultraviolet light in a wavelength range of 280 to 380 nm is preferred from the perspective of industrial use. Furthermore, the irradiation dose varies depending on the type of high energy beam activated catalyst, but in the case of ultraviolet light, the integrated irradiation dose at a wavelength of 365 nm is preferably within a range of 100 mJ/cm² to 100 J/cm².

The amount of the hydrosilylation reaction catalyst should be a catalytic amount, and more specifically, an amount in which the metal atom is in the range of 0.01 to 500 ppm, 0.01 to 100 ppm, or preferably 0.01 to 50 ppm by mass relative to the entire composition.

### [(F) Heat resistance imparting agent]

The composition and cured product of the present invention can achieve these technical effects by containing a certain amount of the aforementioned (D) fatty acid-based compound in combination with Component (F), the heat resistance imparting agent. The blended amount of the heat resistance imparting agent may be within a range of 0.01 to 5.0 mass% (solid fraction) of the total composition, or may be within a range of 0.05 to 2.0 mass%, or 0.07 to 0.5 mass%.

Examples of the heat resistance imparting agent include iron oxide, titanium oxide, cerium oxide, magnesium oxide, zinc oxide, and other metal oxides, cerium hydroxide and other metal hydroxides, phthalocyanine compounds, cerium silanolate, cerium fatty acid salts, reaction products of an organopolysiloxane with a cerium carboxylic acid salt, and the like. Particularly suitably, Component (G) is a phthalocyanine compound, for example, an additive selected from the group consisting of a metal-free phthalocyanine compound and a metal-containing phthalocyanine compound disclosed in JP 2014-503680 W is suitably used, with copper phthalocyanine compounds particularly suitable among the metal-containing phthalocyanine compounds. One example of the most suitable and non-limiting heat resistance imparting agent is 29 H,31H-phthalocyaninato(2-)-N29,N30,N31,N32 copper. Such phthalocyanine compounds are commercially available, for example, Stan-tone (trademark) 40SP03 from PolyOne Corporation (Avon Lake, Ohio, USA.)

### [(G) Siloxane compound with alkoxy group at one end of the molecular chain]

Component (G) is an optional constituent of the composition of the present invention and is one or more of (G1) certain organopolysiloxanes having an alkoxy group only at one end of the molecular chain, and (G2) certain siloxane compounds having an alkenyl group and a hydrolyzable silyl group at the ends of the molecular chain. These compounds are surface treatment agents having an alkoxy group at one end of the molecular chain and a polysiloxane structure, at least in part. By performing surface treatment with Component (G) on at least a portion of the thermally conductive filler, which is Component (C), a curable organopolysiloxane composition with improved flowability, gap-fill properties, and thixotropy of the present composition can be provided, even when a large amount of the thermally conductive filler, Component (D), is added.

Component (G) is one or more of Component (G1) and Component (G2), and either one may be used alone, or both may be used together in a mixture or the like. In the present invention, a particularly suitable Component (G) is one having a trialkoxysilyl or trialkoxysiloxy group at one end of the molecular chain.

Component (G1) is an organopolysiloxane expressed by the general formula (1):
[Chem. Fig. 2] 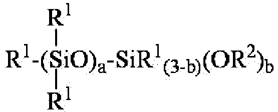 with a viscosity at 25°C that is 10 to less than 10,000 mPa s.

In General Formula (1), R¹ independently represents an unsubstituted or substituted monovalent hydrocarbon group, and examples include straight-chain alkyl groups, branched alkyl groups, cyclic alkyl groups, aryl groups, aralkyl groups, and alkyl halide groups. From an industrial perspective, R¹ is preferably a methyl group or a phenyl group, and is preferably a methyl group, from the perspective of heat resistance.

R² independently represents hydrogen atoms, alkyl groups, alkoxyalkyl groups, alkenyl groups, or acyl groups. From the perspective of surface treatment, R² is preferably an alkyl group, and is particularly preferably a methyl group or an ethyl group.

In General Formula (1), a is an integer in the range of 5 to 250, preferably in a range of 10 to 200. Also, b is an integer from 1 to 3, preferably 2 or 3. A suitable example of Component (G1) in the present invention is polydimethylsiloxane, where b is 3, a trialkoxysiloxy group is provided at one end of the molecular chain, and R¹ is a methyl group.

Component (G2) is a siloxane compound expressed by general formula (2):

R^{alk}R³₂SiO(R³₂SiO)_{c}R³₂Si-R⁴-SiR³_{(3-d)}(OR⁵)_{d},

in which the viscosity at 25°C is within a range of 10 to 10,000 mPa s, and which has an alkenyl group and a hydrolyzable silyl group on ends of a molecular chain.

Herein, R^{alk} represents an alkenyl group, and examples include vinyl groups, allyl groups, hexenyl groups, and other alkenyl groups with 2 to 10 carbon atoms. Component (G2) has an alkenyl group at one end of a molecular chain, and therefore may improve curability and adhesive properties when used in combination with Component (C).

In the formula, R³ independently represents an unsubstituted or substituted monovalent hydrocarbon group that does not have a carbon-carbon double bond, with examples including straight-chain alkyl groups, branched alkyl groups, cyclic alkyl groups, alkenyl groups, aryl groups, aralkyl groups, or halogenated alkyl groups, and is a methyl group or phenyl group from an industrial perspective, preferably a methyl group from a heat resistance perspective. R⁴ represents an oxygen atom or a divalent hydrocarbon group. Examples of the divalent hydrocarbon group serving as R⁴ include methylene groups and other alkylene groups; and ethylene oxyethylene groups, ethylene oxypropylene groups, and other alkyleneoxyalkylene groups. On the other hand, R⁴ may be and is preferably an oxygen atom.

In the formula, R⁵ independently represents a hydrogen atom, an alkyl group, an alkoxyalkyl group, or an acyl group, and is preferably an alkyl group, particularly preferably a methyl group or an ethyl group, from a surface treatment perspective. Component (G2) has a hydrolyzable silyl group in the molecule with one-end structure expressed by Si(OR⁵), which provides excellent surface treatment effects when used in combination with Component (C).

In the formula, c represents the degree of polymerization (excluding ends) of diorganosiloxane units of Component (G2), and is an integer from 1 to 250, preferably from 1 to 100, and particularly preferably from 1 to 50. The integer d in the formula is an integer from 1 to 3, preferably 3. If d represents 3, one end of Component (G2) is particularly preferably a trimethoxysilyl group (-Si (OMe)³).

The amount of Component (G) (or total amount of both Component (G1) and Component (G2) present) that is added is not particularly restricted so long as it is sufficient for surface treatment of Component (C) and for example, is within a range of 0.005 to 100 parts by mass with respect to 100 parts by mass of Component (A) in the entire composition, and is preferably 0.05 to 100 parts by mass, and more preferably 0.5 to 50 parts by mass.

### [(H) C6 or higher alkylalkoxysilane or hydrolyzed condensate thereof]

Component (H) is a component that, similar to Component (G), is a component that functions as a surface treatment agent of Component (C) which is a thermally conductive filler in the composition, and improves the amount of Component (C) added in the composition, the viscosity and fluidity of the entire composition, as well as the adhesive properties. The alkoxysilane must have a C6 or higher alkyl group. If an alkylalkoxysilane containing only an alkyl group of less than C6, such as a methyl group or the like, or a hydrolyzed condensate thereof is used, there may be cases where sufficient adhesive properties cannot be achieved even if used in combination with the adhesion imparting-agents of Component (G) and Component (I), which are described later.

Specific examples of the alkyl group with 6 or more carbon atoms include hexyl groups, octyl groups, dodecyl groups, tetradecyl groups, hexadecyl groups, octadecyl groups, and other alkyl groups, benzyl groups, phenylethyl groups, and other aralkyl groups, and the like. Alkyl groups with 6 to 20 carbon atoms are particularly preferred.

Preferably, Component (H) is an alkoxysilane represented by the structural formula:

YₙSi(OR)₄₋ₙ

(where Y represents an alkyl group with 6 to 18 carbon atoms, R represents an alkyl group with 1 to 5 carbon atoms, and n represents a number from 1 to 3).
Examples of the OR group include a methoxy group, an ethoxy group, a propoxy group, a butoxy group, and the like, and a methoxy group and an ethoxy group are particularly preferred.
Note that n represents 1, 2, or 3, and particularly preferably represents 1.

Examples of this Component (E1) include: C₆H₁₃Si(OCH₃)₃, C₈H₁₇Si(OC₂H₅)₃, C₁₀H₂₁Si (OCH₃)₃, C₁₁H₂₃Si(OCH₃)₃, C₁₂H₂₅Si(OCH₃)₃, C₁₄H₂₉Si(OC₂H₅)₃, and the like, and most suitably decyltrimethoxysilane.

The amount of Component (H) added is not particularly restricted so long as it is sufficient for surface treatment of Component (C) and for example, is within a range of 0.005 to 20 parts by mass with respect to 100 parts by mass of Component (A) in the entire composition, and is preferably 0.05 to 10 parts by mass, and more preferably 0.5 to 7.5 parts by mass.

### [(I) Hydrosilylation reaction inhibitor, adhesion promoter, organic solvent and other additives]

The composition of the present invention must contain Components (A) through (F) and may optionally contain Component (G) and/or Component (H) as a surface treatment agent for Component (C), but may also contain the following other components.

### [Hydrosilylation Reaction Inhibitor]

The composition according to the present invention preferably further contains a hydrosilylation reaction inhibitor in terms of the handling workability thereof. The hydrosilylation reaction inhibitor is a component for suppressing the hydrosilylation reaction of the curable organopolysiloxane composition according to the present invention, with specific examples thereof including reaction inhibitors such as acetylenic ones (such as ethynyl cyclohexanol), amine-based ones, carboxylic acid ester-based ones, and phosphite ester-based ones. The amount of the reaction inhibitor added is usually 0.001 to 5 mass% of the total curable organopolysiloxane composition. 3-methyl-1-butyn-3-ol, 3,5-dimethyl-1-hexyne-3-ol, and 3-phenyl-1-butyne-3-ol (= phenylbutynol), and other acetylenic compounds, 3-methyl-3-pentene-1-yne, 3,5-dimethyl-3-hexene-1-yne, and other enyne compounds, 1,3,5,7-tetramethyl-1,3,5,7-tetravinylcyclotetrasiloxane, 1,3,5,7-tetramethyl-1,3,5,7-tetrahexenylcyclotetrasiloxane, and other cycloalkenylsiloxanes, and benzotriazole and other triazole compounds can be particularly used without any limitation in order to improve the handling workability of the present composition.

### [Adhesion imparting agent]

The composition of the present invention may also contain an adhesion imparting agent for the purpose of improving the adhesive strength of the cured product and the permanent adhesion to the substrate. The adhesion imparting agent that can be used in the present invention may be one or more selected from the following conventionally known adhesion imparting agents, namely, reaction mixtures of an amino group-containing organoalkoxysilane and an epoxy group-containing organoalkoxysilane (including carbasilatrane derivatives and silatrane derivatives having a specific structure), organic compounds having two or more alkoxysilyl groups in a molecule, such as disilyalkane compounds (e.g., 1,6-bis(trimethoxysilyl)hexane), and epoxy group-containing silanes or partially hydrolyzed condensates thereof, and two or more adhesion imparting agents selected therefrom may and preferably are used in combination.

Preferably, the adhesion imparting agent contains:
(IA-1) an epoxy group-containing silane expressed by the general formula:

   R^{a}ₙSi(OR^{b})₄₋ₙ
(where R^{a} represents an organic group containing a monovalent epoxy group, and R^{b} represents an alkyl group with 1 to 6 carbon atoms, or a hydrogen atom. n represents a number within a range of 1 to 3),
or a partially hydrolyzed condensate thereof; and
(IA-2) an organic compound having at least two alkoxysilyl groups in a molecule, in addition to containing a bond other than a silicon-oxygen bond between the silyl groups;
at a mass ratio of 5:95 to 95:5, preferably a mass ratio of 50:50 to 95:5, and more preferably at a mass ratio of 60:40 to 90:30.

Note that these components alone will improve the initial adhesion of organopolysiloxane cured products, but when used in combination at the mass ratio described above, the initial adhesion, adhesive durability, and adhesive strength (permanent adhesion) of the organopolysiloxane cured products may be greatly improved.

Examples of Component (IA-1) described above include 3-glycidoxyprolyltrimethoxysilane, 3-glycidoxypropylmethyldimethoxysilane, 2-(3,4-epoxy cyclohexyl)ethyltrimethoxysilane, and 2-(3,4-epoxy cyclohexyl)ethylmethyldimethoxysilane.

Examples of Component (IA-2) described above include 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, and 1,6-bis(methyldimethoxysilyl)hexane, and other disilyalkanes.

Reaction mixtures of amino group-containing organoalkoxysilanes and epoxy group-containing organoalkoxysilanes (including carbasilatrane and silatrane derivatives having specific structures) disclosed in Japanese Examined Patent Application Publication No. S52-8854 and Japanese Unexamined Patent Application H10-195085 may be further used as adhesion imparting agents other than the Components (IA-1) and (IA-2) above.

### [Organic solvents and other additives]

In addition to the abovementioned components, optional components may be added to the curable organopolysiloxane composition according to the present invention so long as the object of the present invention is not impaired. Examples of optional components include: an organopolysiloxane that does not contain a silicon-bonded hydrogen atom or a silicon-bonded alkenyl group, a cold resistance imparting agent, a flame-retardant imparting agent, a pigment, a dye, and the like. Furthermore, the curable organopolysiloxane composition of the present invention can, if desired, contain: one or more type of antistatic agents including known surfactants and the like; a dielectric filler; an electrically conductive filler; a mold release component; a thixotropy imparting agent; an antifungal agent; and the like. If desired, an organic solvent may be added.

### [Manufacturing Method and Dosage Form of Composition]

The curable organopolysiloxane composition of the present invention can be prepared by mixing each of the components, and an example of a mixing device includes the same device as that exemplified in the surface treatment of Component (C). As mentioned above, Component (D) may be added at any timing after surface treatment and base heating of Component (C), or together with the surface treatment agent of Component (C), and either timing can be used to achieve the technical effects of the present invention. More specifically, the composition of the present invention is produced by i) a manufacturing method (mixing process) including a step of mixing Component (A), Component (C), and optionally Component (G) and/or Component (H) described above, followed by a step of mixing Component (D) and other components after heating and mixing the mixture; or ii) a manufacturing method (mixing process) including a step of mixing Component (A), Component (C), Component (D), and optionally Component (G) and/or Component (H), followed by a step of heating and mixing the mixture, and then a step of mixing other components.

Note that the heating conditions are the same as the base heat conditions described earlier for the surface treatment of Component (C), and preferably, the entire mixture is made substantially uniform during mixing.

The curable organopolysiloxane compositions according to the present invention may be one-component compositions, preferably including the aforementioned hydrosilylation reaction inhibitor and other components, or multi-component compositions containing two or more compositions that are stored separately. In the case of multi-component compositions, Component (A), Component (B), and Component (E) described above must not be included at the same time. This is because when these components (main component, crosslinking agent, and catalyst) are blended simultaneously, a crosslinking reaction starts spontaneously and the storage stability of the composition is lost in a short period of time, and thus the long-term storage stability and handling workability, which are objectives of a multi-component composition, may not be achieved. Note that the multi-component composition is coated or applied after being mixed in a common container at the time of use using a mixer or other mechanical force, or using a dispenser or the like capable of mixing a plurality of components.

### [Curability]

The curable organopolysiloxane composition of the present invention is cured by a hydrosilylation reaction to form an organopolysiloxane cured material with excellent thermal conductivity, while suppressing a hardness change even after heat aging, and providing excellent flexibility and stress relaxation properties. While not particularly limited thereto, the temperature conditions for curing the hydrosilylation curing type silicone composition are normally within a range of 20°C to 200°C, preferably 20°C to 150°C, and more preferably within a range of 20 to 80°C. If desired, curing may be performed in a short time at a high temperature, or curing may be performed over a long time (for example, several hours to several days) at a low temperature such as room temperature, and there are no particular limitations. Note that curing may be triggered by irradiation of a high-energy beam by selecting a high-energy beam-activated or photo-activated catalyst as at least a portion of component (E).

By using the curable organopolysiloxane composition according to the present invention, a heat dissipating structure can be obtained by applying the curable organopolysiloxane composition described above to a heat dissipating component or a circuit board on which the heat dissipating component is mounted, and forming a cured product at a temperature of 20°C to 150°C, preferably less than 130°C, such as in a range of 20 to 125°C, to provide a heat dissipating member.

### [Thermal conductivity]

The curable organopolysiloxane composition of the present invention can be stably filled with a large amount of thermally conductive filler and provides a thermal conductivity of 2.5 W/mK or higher, preferably 3.0 W/mK or higher, and more preferably 7.0 W/mK or more. With the curable organopolysiloxane composition of the present invention, a composition or cured product can be designed with thermal conductivity of 2.5 to 9.5 W/mK, or 7.0 to 9.5 W/mK if desired, and thus a thermally conductive cured product with suppressed hardness change and excellent flexibility and stress relaxation properties can be achieved even after heating and aging.

### [Applications and Heat Dissipation Structures]

The curable organopolysiloxane composition of the present invention and a cured product thereof are useful as heat transfer materials (thermally conductive members) to be interposed at the interface between a thermal boundary surface of a heat-generating component and a heat dissipating member such as a heat sink, a circuit board, or the like for cooling the heat-generating component by heat conduction, and a heat dissipating structure can be formed provided therewith. Herein, although the type, size, and fine parts of a heat-generating component are not particularly limited, the cured product obtained by curing the curable organopolysiloxane composition of the present invention not only provides high thermal conductivity and excellent initial adhesion and adhesive strength to a member, but can also suppress changes in hardness over a long period of time, and even after heat aging can maintain flexibility and stress relaxation, and thus provides resistance to peeling or separating from heat generating members due to vibration and the like, has high adhesion and followability, and has excellent industrial productivity, making it suitable for automotive components, electrical or electronic components, and heat dissipating structures for electrical or electronic devices including cell-type secondary batteries.

Although the structure of such a heat dissipating structure is not particularly limited, an example is a heat dissipation structure with a heat dissipating member provided via a curable organopolysiloxane composition or cured product thereof on a heat dissipating component or a circuit board on which this heat dissipating component is mounted. Such a structure is exemplified, for example, by a structure in which an electronic component, which is a heat dissipating component, is mounted on a circuit board and the heat generated by the electronic component is dissipated by heat dissipating members via a thin film layer of the curable organopolysiloxane composition or a cured product thereof, and these members may be preferably provided not only on a horizontal surface but also on an inclined or vertical surface because the change in hardness after heat aging is minimal, flexibility and stress relaxation of the heat dissipating member is maintained, and the bonding properties and tracking properties are excellent, which are the features of the present invention.

In such a heat dissipating structure, the thickness of the curable organopolysiloxane composition or cured product thereof is not particularly limited, but may be within a range of 0.1 to 100 mm to efficiently transfer heat generated from an electronic component filled with the composition or cured product thereof without a gap to a heat dissipating member.

Electrical and electronic devices equipped with a member made up of the thermally conductive silicone composition are not particularly limited, but include: for example, secondary batteries such as cell-based lithium-ion electrode secondary batteries and cell-stack fuel cells; electronic circuit boards such as printed circuit boards; IC chips packaged with optical semiconductor elements such as diodes (LEDs), organic electric field element (organic EL), laser diodes and LED arrays; CPUs used in electronic devices such as personal computers, digital video disks, mobile phones, and smartphones; and LSI chips such as driver ICs and memory, and the like. In particular, in high performance digital switching circuits formed with high integration density, heat removal (heat dissipation) is a major factor in the performance and reliability of the integrated circuits. Thermally conductive members using the curable organopolysiloxane composition according to the present invention have superior heat dissipation and handling workability when applied to power semiconductor applications such as engine control, power train systems, air conditioner control, and the like in transportation equipment, and can also maintain a strong adhesive force with a member and achieve superior heat resistance and thermal conductivity when incorporated into in-vehicle electronic components such as electronic control units (ECU) and the like and be used in a harsh environment.

### [EXAMPLES]

The present invention will be described below by way of examples; however, the present invention is not limited thereto. In the Examples and Comparative Examples shown below, the following compounds or compositions were used as raw materials.

### [Preparation of composition and preparation of thermally conductive silicone cured product (evaluation samples)]

The components were mixed as described below to obtain curable organopolysiloxane compositions of Examples 1 to 12 and Comparative Examples 1 to 6 (hereinafter referred to as "thermally conductive silicone compositions"). Next, each of the thermally conductive silicone compositions was filled into a mold with a height of 6 mm, a length of 50 mm, and a width of 30 mm, cured at 50°C for 30 minutes, and then removed from the mold to obtain a thermally conductive silicone cured product. The thermal conductivity, hardness, and change in hardness after heat aging of the resulting thermally conductive silicone cured product were measured by the following methods.

### [Thermoelectric conductivity]

Thermal conductivity was measured using two pieces of thermally conductive silicone cured product obtained under the above conditions using a TPS-500 (hot disk method) manufactured by Kyoto Electronics Industry Co.

### [Hardness (Type E hardness)]

Hardness was measured by overlapping two thermally conductive silicone cured products obtained under the above conditions and measuring the value after 3 seconds using an ASKER TYPE E hardness tester manufactured by ASKER.

### [Change in hardness]

Two sheets of thermally conductive silicone cured product obtained under the above conditions were cured in a hot air circulation oven at 150°C for 100 hours. After removal from the oven, the sheets were cooled to 25°C, and then the two thermally conductive silicone cured products were overlaid and the hardness was measured after 3 seconds using an ASKER TYPE E hardness tester manufactured by ASKER. The difference in hardness was measured before and after curing at 150°C.

The composition of the present invention is formed using each of the following components.

### Component (A):

A-1: Dimethylpolysiloxane blocked with dimethylvinylsiloxy groups at both ends of a molecular chain (viscosity: 60 mPa·s, amount of Vi: 1.52 mass%)
A-2: Dimethylpolysiloxane blocked with dimethylvinylsiloxy groups at both ends of a molecular chain (viscosity: 400 mPa s, amount of Vi: 0.43 mass%)

### Component (B):

B-1: Methylhydrogen siloxane-dimethylsiloxane copolymer capped at both molecular terminals with trimethylsiloxy groups, average of 2 in the molecule, average of 2 in the side molecular chain (viscosity: 20 mPa-s, Si-H content: 0.10% by mass)
B-2: Methylhydrogen siloxane-dimethylsiloxane copolymer capped at both molecular terminals with trimethylsiloxy groups, average of 5 in the molecule, average of 5 in the side molecular chain (viscosity: 5 mPa-s, Si-H content: 0.75% by mass)
B-3: 1,1,1,3,5,5,5-heptamethyltrisiloxane (Si-H content 0.45 mass%)

### Component (C):

(C-1): Polyhedral spherical α-type aluminum oxide powder with an average particle diameter of 0.5 µm (AA04 manufactured by Sumitomo Chemical)
(C-2): Polyhedral spherical α-type aluminum oxide powder with an average particle diameter of 2 µm (AA2 manufactured by Sumitomo Chemical)
(C-3): Crushed aluminum oxide powder with an average particle diameter of 0.4 µm (AES-12 manufactured by Sumitomo Chemical)
(C-4): Crushed aluminum oxide powder with an average particle diameter of 2.5 µm (AL-M73A manufactured by Sumitomo Chemical)
(C-5): Spherical melt-solidified aluminum oxide powder with an average particle diameter of 95 µm (DAW-90 manufactured by Denka Co. Ltd.)
(C-6): Amorphous aluminum nitride powder with an average particle diameter of 19 µm (TFZ-S20P manufactured by Toyo Aluminum)
(C-7): Amorphous aluminum nitride powder with an average particle diameter of 27 µm (TFZ-S30P manufactured by Toyo Aluminum)
(C-8): Spherical magnesium oxide powder with an average particle diameter of 90 µm

### Component (D):

D-1: Calcium stearate (Fujifilm Wako Pure Chemicals)
D-2: Stearic acid (Fujifilm Wako Pure Chemicals)
D-3: Lithium stearate (Fujifilm Wako Pure Chemicals)

### Component (E):

E-1: Complex of platinum and 1,3-divinyl-1,1,3,3-tetramethyldisiloxane with a platinum concentration of 0.6% by weight

### Component (F):

F-1: 29H,31H-phthalocyaninato(2-)-N29,N30,N31,N32-copper
Curing retarder: Phenylbutynol

### Component (G1):

Filler treatment agent (1): Organopolysiloxane expressed by:

(CH₃)₃SiO[(CH₃)₂SiO]₃₀-Si(OCH₃)₃

### Component (H):

### Filler treatment agent (2): Decyltrimethoxysilane

### [Example 1]

100 parts by mass of Component (A-1), 1.33 parts by mass of Component (F-1) were weighed, and then 128 parts by mass of Component (C-1), 180 parts by mass of Component (C-2), 317.5 parts by mass of Component (C-5), 66.4 parts by mass of Component (C-6), and 161 parts by mass of Component (C-7) were sequentially mixed in over a period of 60 minutes. After homogenization, the mixture was heated and mixed at 160 °C for 60 minutes under reduced pressure, and then cooled to room temperature. 28.4 parts by mass of Component (B-1), 0.28 parts by mass of Component (B-2), 0.95 parts by mass of Component (D-1), and 0.016 parts by mass of phenylbutynol as a reaction inhibitor were uniformly mixed in the mixture. Next, 0.66 parts by mass of Component (E-1) were mixed uniformly to obtain the thermally conductive silicone composition. Note that AT.K. HIVIS MIX (model number) manufactured by TOKUSHU KIKA KOGYO CO., LTD. was used as the mixing device for mixing each of the examples and comparison examples in the present invention.

### [Example 2]

A thermally conductive silicone composition was obtained in the same manner as in Example 1, except that the 0.95 parts by mass of Component (D-1) in Example 1 was changed to 0.95 parts by mass of Component (D-2).

### [Comparative Example 1]

The thermally conductive silicone composition was obtained in the same manner as in Example 1, except that the 0.95 parts by mass of Component (D-1) in Example 1 was removed.

The composition, thermal conductivity of the thermally conductive silicone cured material obtained, hardness, and change in hardness after heat aging of the thermally conductive silicone cured material obtained in Examples 1, 2, and Comparative Example 1 are shown in Table 1.

**[Table 1]**

| Component | Example 1 | Example 2 | Comparative Example 1 |
|---|---|---|---|
| A-1 | 100 | 100 | 100 |
| B-1 | 28.4 | 28.4 | 28.4 |
| B-2 | 0.28 | 0.28 | 0.28 |
| C-1 | 128 | 128 | 128 |
| C-2 | 180 | 180 | 180 |
| C-5 | 317.5 | 317.5 | 317.5 |
| C-6 | 66.4 | 66.4 | 66.4 |
| C-7 | 161 | 161 | 161 |
| D-1 | 0.95 | - | - |
| D-2 | - | 0.95 | - |
| E-1 | 0.66 | 0.66 | 0.66 |
| F-1 | 1.33 | 1.33 | 1.33 |
| phenylbutynol | 0.016 | 0.016 | 0.016 |
| Molar ratio of SiH/alkenyl group | 0.54 | 0.54 | 0.54 |
| Amount of Component (C) (vol.%) | 63.2 | 63.2 | 63.2 |
| In 100 parts by mass of Component (C) | 0.11 | 0.11 | 000 |
| Amount of Component (D) | | | |
| Time for adding Component (D) | After heat treatment | After heat treatment | None added |
| Thermal conductivity (W/m·K) | 2.9 | 2.9 | 2.9 |
| Type E hardness (initial) | 48 | 30 | 47 |
| Type E hardness (after 100 hours at 150°C) | 51 | 35 | 67 |
| Change in hardness | +3 | +5 | +20 |

### [Example 3]

100 parts by mass of Component (A-1), 26.4 parts by mass of Component (B-1), 4.8 parts by mass of Component (F-1), 41.6 parts by mass of filler treatment agent (1), and 6.4 parts by mass of filler treatment agent (2) were weighed, and then 457.6 parts by mass of Component (C-1), 640 parts by mass of Component (C-2), 1120 parts by mass of Component (C-5), 224 parts by mass of Component (C-6), and 576 parts by mass of Component (C-7) were sequentially mixed in over a period of 60 minutes. After homogenization, the mixture was heated and mixed at 160 °C for 60 minutes under reduced pressure, and then cooled to room temperature.

0.64 parts by mass of Component (B-2), 3.2 parts by mass of Component (D-1), and 0.053 parts by mass of phenylbutynol as a reaction inhibitor were uniformly mixed into the mixture. Next, 2.4 parts by mass of Component (E-1) were mixed uniformly to obtain the thermally conductive silicone composition.

### [Example 4]

The thermally conductive silicone composition was obtained in the same manner as in Example 3, except that the 3.2 parts by mass of Component (D-1) in Example 3 was changed to 30.1 parts by mass.

### [Example 5]

The thermally conductive silicone composition was obtained in the same manner as in Example 3, except that the 3.2 parts by mass of Component (D-1) in Example 3 was changed to 45.1 parts by mass.

### [Example 6]

The thermally conductive silicone composition was obtained in the same manner as in Example 3, except that the 3.2 parts by mass of Component (D-1) in Example 3 was changed to 60.5 parts by mass.

### [Example 7]

100 parts by mass of Component (A-1), 27.4 parts by mass of Component (B-1), 1.61 parts by mass of Component (D-1), 4.8 parts by mass of Component (F-1), 40.3 parts by mass of filler treatment agent (1), and 6.45 parts by mass of filler treatment agent (2) were weighed, and then 461.3 parts by mass of Component (C-1), 645.2 parts by mass of Component (C-2), 1129 parts by mass of Component (C-5), 225.8 parts by mass of Component (C-6), and 580.6 parts by mass of Component (C-7) were sequentially mixed in over a period of 60 minutes. After homogenization, the mixture was heated and mixed at 160 °C for 60 minutes under reduced pressure, and then cooled to room temperature.

0.65 parts by mass of Component (B-2) and 0.054 parts by mass of phenylbutynol as a reaction inhibitor were uniformly mixed into the mixture. Next, 2.4 parts by mass of Component (E-1) were mixed uniformly to obtain the thermally conductive silicone composition.

### [Example 8]

The thermally conductive silicone composition was obtained in the same manner as in Example 7, except that the 1.61 parts by mass of Component (D-1) in Example 7 was changed to 3.23 parts by mass, and the 40.3 parts by mass of filler treatment agent (1) was changed to 38.7 parts by mass.

The composition, thermal conductivity of the thermally conductive silicone cured material obtained, hardness, and change in hardness after heat aging of the thermally conductive silicone cured material obtained in Examples 3 to 8 are shown in Table 2.

**[Table 2]**

| Component | Example 3 | Example 4 | Example 5 | Example 6 | Example 7 | Example 8 |
|---|---|---|---|---|---|---|
| A-1 | 100 | 100 | 100 | 100 | 100 | 100 |
| B-1 | 26.4 | 26.4 | 26.4 | 26.4 | 27.4 | 27.4 |
| B-2 | 0.64 | 0.64 | 0.64 | 0.64 | 0.65 | 0.65 |
| C-1 | 457.6 | 457.6 | 457.6 | 457.6 | 461.3 | 461.3 |
| C-2 | 640 | 640 | 640 | 640 | 645.2 | 645.2 |
| C-5 | 1120 | 1120 | 1120 | 1120 | 1129 | 1129 |
| C-6 | 224 | 224 | 224 | 224 | 225.8 | 225.8 |
| C-7 | 576 | 576 | 576 | 576 | 580.6 | 580.6 |
| D-1 | 3.2 | 30.1 | 45.1 | 60.5 | 1.61 | 3.23 |
| E-1 | 2.4 | 2.4 | 2.4 | 2.4 | 2.4 | 2.4 |
| F-1 | 4.8 | 4.8 | 4.8 | 4.8 | 4.8 | 4.8 |
| phenylbutynol | 0.053 | 0.053 | 0.053 | 0.053 | 0.054 | 0.054 |
| Filler treatment agent (1) | 41.6 | 41.6 | 41.6 | 41.6 | 40.3 | 38.7 |
| Filler treatment agent (2) | 6.4 | 6.4 | 6.4 | 6.4 | 6.45 | 6.45 |
| Molar ratio of SiH/alkenyl group | 0.55 | 0.55 | 0.55 | 0.55 | 0.57 | 0.57 |
| Amount of Component (C) (vol.%) | 81.1 | 78.8 | 81.4 | 75.9 | 81.4 | 81.4 |
| In 100 parts by mass of Component (C) | 0.11 | 100 | 1.50 | 2.00 | 0.053 | 0.11 |
| Amount of Component (D) | | | | | | |
| Time for adding Component (D) | After heat treatment | After heat treatment | After heat treatment | After heat treatment | Before heat treatment | Before heat treatment |
| Thermal conductivity (W/m·K) | 9.1 | 8.2 | 7.2 | 7.3 | 9.1 | 9.1 |
| Type E hardness (initial) | 47 | 53 | 55 | 59 | 51 | 48 |
| Type E hardness (after 100 hours at 150°C) | 60 | 71 | 72 | 75 | 65 | 59 |
| Change in hardness | +13 | +18 | +17 | +16 | +14 | +11 |

### [Comparative Example 2]

The thermally conductive silicone composition was obtained in the same manner as in Example 3, except that the 3.20 parts by mass of Component (D-1) in Example 3 was removed.

### [Comparative Example 3]

The thermally conductive silicone composition was obtained in the same manner as in Example 3, except that the 3.20 parts by mass of Component (D-1) in Example 3 was changed to 0.32 parts by mass.

### [Comparative Example 4]

The thermally conductive silicone composition was obtained in the same manner as in Example 3, except that the 3.20 parts by mass of Component (D-1) in Example 3 was changed to 64 parts by mass.

The composition, thermal conductivity of the thermally conductive silicone cured material obtained, hardness, and change in hardness after heat aging of the thermally conductive silicone cured material obtained in Comparative Examples 2 to 4 are shown in Table 3.

**[Table 3]**

| Component | Comparative Example 2 | Comparative Example 3 | Comparative Example 4 |
|---|---|---|---|
| A-1 | 100 | 100 | 100 |
| B-1 | 26.4 | 26.4 | 26.4 |
| B-2 | 0.64 | 0.64 | 0.64 |
| C-1 | 457.6 | 457.6 | 457.6 |
| C-2 | 640 | 640 | 640 |
| C-5 | 1120 | 1120 | 1120 |
| C-6 | 224 | 224 | 224 |
| C-7 | 576 | 576 | 576 |
| D-1 | - | 0.32 | 64 |
| E-1 | 2.4 | 2.4 | 2.4 |
| F-1 | 4.8 | 4.8 | 4.8 |
| phenylbutynol | 0.053 | 0.053 | 0.053 |
| Filler treatment agent (1) | 41.6 | 41.6 | 41.6 |
| Filler treatment agent (2) | 6.40 | 6.40 | 6.40 |
| Molar ratio of SiH/alkenyl group | 0.55 | 0.55 | 0.55 |
| Amount of Component (C) (vol.%) | 81.4 | 81.4 | 75.9 |
| In 100 parts by mass of Component (C) | 0.00 | 0.011 | 2.12 |
| Amount of Component (D) | | | |
| Time for adding Component (D) | None added | After heat treatment | After heat treatment |
| Thermal conductivity (W/m·K) | 9.0 | 9.1 | 7.2 |
| Type E hardness (initial) | 38 | 44 | 51 |
| Type E hardness (after 100 hours at 150°C) | 79 | 74 | 79 |
| Change in hardness | +41 | +30 | +28 |

### [Example 9]

100 parts by mass of Component (A-1), 25.9 parts by mass of Component (B-1), 3.45 parts by mass of Component (D-1), 5.2 parts by mass of Component (F-1), 55.2 parts by mass of filler treatment agent (1), and 6.9 parts by mass of filler treatment agent (2) were weighed, and then 500 parts by mass of Component (C-1), 690 parts by mass of Component (C-2), 241 parts by mass of Component (C-6), 621 parts by mass of Component (C-7), and 1200 parts by mass of Component (C-8) were sequentially mixed in over a period of 60 minutes. After homogenization, the mixture was heated and mixed at 160 °C for 60 minutes under reduced pressure, and then cooled to room temperature. 0.69 parts by mass of Component (B-2) and 0.057 parts by mass of phenylbutynol as a reaction inhibitor were uniformly mixed into the mixture. Next, 2.6 parts by mass of Component (E-1) were mixed uniformly to obtain the thermally conductive silicone composition.

### [Example 10]

A thermally conductive silicone composition was obtained in the same manner as in Example 9, except that the 5.17 parts by mass of Component (B-3) was additionally added to Example 9.

### [Example 11]

A thermally conductive silicone composition was obtained in the same manner as in Example 9, except that the 3.45 parts by mass of Component (D-1) in Example 9 was changed to 3.45 parts by mass of Component (D-3).

### [Comparative Example 5]

The thermally conductive silicone composition was obtained in the same manner as in Example 9, except that the 3.45 parts by mass of Component (D-1) in Example 9 was removed.

The composition, thermal conductivity of the thermally conductive silicone cured material obtained, hardness, and change in hardness after heat aging of the thermally conductive silicone cured material obtained in Examples 9 to 11 and Comparative Example 5 are shown in Table 4.

**[Table 4]**

| Component | Example 9 | Example 10 | Example 11 | Comparative Example 5 |
|---|---|---|---|---|
| A-1 | 100 | 100 | 100 | 100 |
| B-1 | 25.9 | 25.9 | 25.9 | 25.9 |
| B-2 | 0.69 | 0.69 | 0.69 | 0.69 |
| B-3 | - | 5.17 | - | - |
| C-1 | 500 | 500 | 500 | 500 |
| C-2 | 690 | 690 | 690 | 690 |
| C-6 | 241 | 241 | 241 | 241 |
| C-7 | 621 | 621 | 621 | 621 |
| C-8 | 1200 | 1200 | 1200 | 1200 |
| D-1 | 3.45 | 3.45 | - | - |
| D-3 | - | - | 3.45 | - |
| E-1 | 2.6 | 2.6 | 2.6 | 2.6 |
| F-1 | 5.2 | 5.2 | 5.2 | 5.2 |
| phenylbutynol | 0.057 | 0.057 | 0.057 | 0.057 |
| Filler treatment agent (1) | 55.2 | 55.2 | 55.2 | 55.2 |
| Filler treatment agent (2) | 6.9 | 6.9 | 6.9 | 6.9 |
| Molar ratio of SiH/alkenyl group | 0.55 | 0.96 | 0.55 | 0.55 |
| Amount of Component (C) (vol.%) | 82.2 | 81.8 | 82.2 | 82.2 |
| In 100 parts by mass of Component (C) | 0.11 | 0.11 | 0.11 | 0.00 |
| Amount of Component (D) | | | | |
| Time for adding Component (D) | After heat treatment | After heat treatment | After heat treatment | None added |
| Thermal conductivity (W/m·K) | 8.6 | 8.4 | 8.6 | 8.9 |
| Type E hardness (initial) | 32 | 43 | 34 | 33 |
| Type E hardness (after 100 hours at 150°C) | 43 | 49 | 43 | 71 |
| Change in hardness | +11 | +6 | +9 | +38 |

### [Example 12]

100 parts by mass of Component (A-2), 1.8 parts by mass of Component (F-1), and 5.0 parts by mass of filler treatment agent (2) were weighed, and then 243 parts by parts by mass of Component (C-3) and 540 parts by mass of Component (C-4) were added sequentially over 60 minutes. After homogenization, the mixture was heated and mixed at 160 °C for 60 minutes under reduced pressure, and then cooled to room temperature. 8.5 parts by mass of Component (B-1), 0.14 parts by mass of Component (B-2), 0.9 parts by mass of Component (D-1), and 0.015 parts by mass of phenylbutynol as a reaction inhibitor were uniformly mixed in the mixture. Next, 0.68 parts by mass of Component (E-1) were mixed uniformly to obtain the thermally conductive silicone composition.

### [Comparative Example 6]

The thermally conductive silicone composition was obtained in the same manner as in Example 12, except that the 0.9 parts by mass of Component (D-1) in Example 12 was removed.

The composition, thermal conductivity of the thermally conductive silicone cured material obtained, hardness, and change in hardness after heat aging of the thermally conductive silicone cured material obtained in Examples 12 and Comparative Example 6 are shown in Table 5.

**[Table 5]**

| Component | Example 12 | Comparative Example 6 |
|---|---|---|
| A-2 | 100 | 100 |
| B-1 | 8.5 | 8.5 |
| B-2 | 0.14 | 0.14 |
| C-3 | 243 | 243 |
| C-4 | 540 | 540 |
| D-1 | 0.90 | - |
| E-1 | 0.68 | 0.68 |
| F-1 | 1.80 | 1.80 |
| phenylbutynol | 0.015 | 0.015 |
| Filler treatment agent (2) | 5.0 | 5.0 |
| Molar ratio of SiH/alkenyl group | 0.57 | 0.57 |
| Amount of Component (C) (vol.%) | 62.6 | 62.6 |
| In 100 parts by mass of Component (C) | 0.11 | 0.00 |
| Amount of Component (D) | | |
| Time for adding Component (D) | After heat treatment | None added |
| Thermal conductivity (W/m·K) | 2.0 | 1.9 |
| Type E hardness (initial) | 30 | 20 |
| Type E hardness (after 100 hours at 150°C) | 32 | 30 |
| Change in hardness | +2 | +10 |

As shown in Table 1, the change in hardness of Comparative Example 1 which did not contain Component (D) was +20 after curing at 150°C for 100 hours, whereas the hardness change of Examples 1 and 2 that contained 0.11 parts by mass of Component (D) for 100 parts by mass of Component (C) was +3 and +5, respectively, indicating that the change in hardness was suppressed.

As shown in Table 2, the change in hardness of examples 3 to 8 in which Component (D) was added within the range of 0.05 to 2 parts by mass for 100 parts by mass of Component (C) was +11 to +18 after curing at 150°C for 100 hours. In contrast, as shown in Table 3, the change in hardness in Comparative Example 2 where Component (D) was excluded from Example 3 was +41. The change in hardness of Comparative Example 3 where the amount of Component (D) of Example 3 was 0.011 parts by mass to 100 parts by mass of Component (C), was +28, and the change in hardness of Comparative Example 4 where the amount of Component (D) was 2.12 parts by mass, was +28. It was confirmed that the change in hardness was suppressed in Examples 3 to 8 as compared to Comparative Examples 2 to 4, and that the change in hardness could not be suppressed when the amount of Component (D) was outside the specified range of the present invention (Comparative Examples 3 and 4), indicating the critical significance of the quantitative limitation.

As shown in Table 4, the change in hardness of Comparative Example 5 which did not contain Component (D) was +38 after curing at 150°C for 100 hours, whereas the change in hardness of Examples 9 to 11 that contained 0.11 parts by mass of Component (D) for 100 parts by mass of Component (C) was +11 to +6, indicating that the change in hardness was suppressed.

As shown in Table 5, the change in hardness of Comparative Example 6 which did not contain Component (D) was +10 after curing at 150°C for 100 hours, whereas the change in hardness of Example 12 that contained 0.11 parts by mass of Component (D) for 100 parts by mass of Component (C) was +2, indicating that the change in hardness was suppressed.

### [Summary]

The results of Examples 1 to 12 show that when the fatty acid compound (fatty acid or fatty acid metal salt as Component (D)) is within the range of 0.05 to 2 parts by mass for 100 parts by mass of inorganic filler (or heat dissipation filler), the change in hardness of the composition was suppressed even after long-term aging at a high temperature condition of 150°C. Therefore, these heat-dissipating members are expected to achieve sufficient heat-dissipation characteristics without losing stress relaxation properties and flexibility, even when used for long periods of time in high temperature conditions.

On the other hand, based on Comparative Examples 1 to 6, when a fatty acid compound (fatty acid or fatty acid metal salt as Component (D)) is not added, or when the amount of the fatty acid compound is outside the scope of the claims of the present invention, the composition in the comparative examples underwent rapid changes in hardness when aged at a high temperature condition of 150°C for a long period of time. Therefore, unlike the examples of the present invention, there is a strong concern that if these heat conductive materials are used for a long period of time, especially at high temperatures, the change in hardness may cause physical peeling or may create voids between the heat sink due to vibration, and the originally anticipated heat dissipation performance may not be achieved.

## Claims

1. A curable organopolysiloxane composition, comprising:
(A) 100 parts by mass of an alkenyl group-containing organopolysiloxane having a viscosity of 10 to 100,000 mPa·s at 25°C;
(B) an organohydrogenpolysiloxane in an amount in which silicon atom-bonded hydrogen atoms in Component (B) are 0.1 to 10 mols with respect to 1 mol of alkenyl groups in Component (A);
(C) a thermally conductive filler in an amount that ranges from 60 to 90% by volume based on the total solid content in the composition;
(D) at least one or more fatty acid, fatty acid ester or fatty acid metal salt in an amount ranging from 0.05 to 2.00 parts by mass per 100 parts by mass of Component (C);
(E) a catalytic amount of a catalyst for a hydrosilylation reaction; and
(F) a heat resistance imparting agent.

2. The curable organopolysiloxane composition according to claim 1, wherein Component (D) is at least one or more of (D1) a saturated fatty acid and a metal salt of a saturated fatty acid.

3. The curable organopolysiloxane composition according to claim 1 or claim 2, wherein Component (D) is one or more selected from (D1-1) stearic acid, alkali metal salts of stearic acid, and alkaline earth metal salts of stearic acid.

4. The curable organopolysiloxane composition according to any one of claims 1 to 3, wherein Component (F) is a heat resistance imparting agent containing (F1) a phthalocyanine compound at least in part.

5. The curable organopolysiloxane composition according to any one of claims 1 to 4, further comprising:
(G) one or more components selected from the following Components (G1) and (G2):
(G1) an organopolysiloxane having a viscosity of 10 to less than 10,000 mPa-s at 25°C, expressed by general formula (1):
[Chem. Fig. 1] 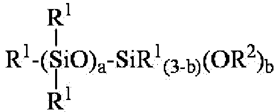
(In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 5 to 250, and b is an integer from 1 to 3);
(G2) a siloxane compound having an alkenyl group and a hydrolyzable silyl group on a molecular end and a viscosity of 10 to less than 10,000 mPa▪ s at 25°C, expressed by general formula (2):
R^{alk}R³₂SiO(R³₂SiO)_{c}R³₂Si-R⁴-SiR³_{(3-d)}(OR⁵)_{d}
(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3); and
(H) one or more type of alkoxysilane having an alkyl group with 6 or more carbon atoms in a molecule, or a hydrolysis condensate thereof.

6. The curable organopolysiloxane composition according to any one of claims 1 to 5, wherein the thermal conductivity of the cured product obtained by curing the composition is 2.5 W/mK or higher.

7. The curable organopolysiloxane composition according to claim 5, wherein the amount of Component (C) is in the range of 70 to 90% by volume of the total composition, Component (G) is in a range of 0.005 to 100 parts by mass based on 100 parts by mass of Component (A), and Component (H) is in a range of 0.005 to 20 parts by mass to 100 parts by mass of Component (A), and the thermal conductivity of the cured product obtained by curing the composition is 7.0 W/mK or higher.

8. A thermally conductive member, comprising the curable organopolysiloxane composition according to any one of claims 1 to 7 or a cured product thereof.

9. A heat dissipating structure, comprising the thermally conductive member according to claim 8.

10. A heat dissipating structure, comprising a heat dissipating member provided via the curable organopolysiloxane composition according to any one of claims 1 to 7 or a cured product thereof on a heat dissipating component or a circuit board on which the heat dissipating component is mounted.

11. The heat dissipating structure according to claim 9 or claim 10, which is an electrical or electronic device.

12. The heat dissipating structure according to claim 9 or claim 10, which is an electrical or electronic component or a secondary battery.

13. A method of manufacturing a curable organopolysiloxane composition according to any one of claims 1 to 7, comprising: a step of mixing Component (A), Component (C), and optionally Component (G) and/or Component (H), and then heating and mixing the mixture; and
a step of mixing Component (D) and other components.

14. A method of manufacturing a curable organopolysiloxane composition according to any one of claims 1 to 7, comprising: a step of mixing Component (A), Component (C), Component (D), and optionally Component (G) and/or Component (H) and then heating and mixing the mixture; and
a step of mixing other components.

15. A method of manufacturing a heat dissipating structure, comprising a step of applying the curable organopolysiloxane composition according to any one of claims 1 to 7 to a heat dissipating component or a circuit board on which the heat dissipating component is mounted, and then curing at a temperature less than 130°C.
